(19) Europäisches Patentamt
European Patent Office
Office européen des brevets

(11) Veröffentlichungsnummer: **0 077 948**
**A1**

(12) **EUROPÄISCHE PATENTANMELDUNG**

(21) Anmeldenummer: 82109289.7

(51) Int. Cl.³: **C 08 L 23/04**

(22) Anmeldetag: 07.10.82

(30) Priorität: 20.10.81 DE 3141506

(43) Veröffentlichungstag der Anmeldung: 04.05.83 Patentblatt 83/18

(84) Benannte Vertragsstaaten: AT BE CH DE FR GB LI NL SE

(71) Anmelder: BASF Aktiengesellschaft
Carl-Bosch-Strasse 38
D-6700 Ludwigshafen(DE)

(72) Erfinder: Koehnlein, Ernst, Dr.
Ungsteiner Strasse 4
D-6700 Ludwigshafen(DE)

(72) Erfinder: Koessler, Ludwig
Schlachthofstrasse 24 A
D-6718 Gruenstadt(DE)

# (54) Verwendung von Ethylenpolymerisaten zur Herstellung von Rohren.

(57) Die Erfindung betrifft die Verwendung von Mischungen aus 100 Gewichtsteilen Ethylenpolymerisat, 0,05 bis 0,2 Gewichtsteile einer Verbindung der allgemeinen Formel X–R, worin

X =

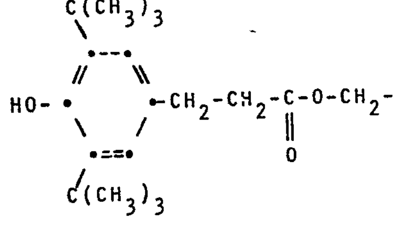

und R = $-C_{17}H_{35}$ oder $-C(X)_3$, 0,02 bis 0,1 Gewichtsteile elementarer Schwefel und eines Vernetzungsmittels zur Herstellung von Rohren.

Als Vernetzungsmittel werden entweder eine in der Wärme radikalisch zerfallende organische Verbindung oder energiereiche Strahlung eingesetzt.

EP 0 077 948 A1

# Verwendung von Ethylenpolymerisaten zur Herstellung von Rohren

Die Erfindung betrifft die Verwendung von Ethylenpolymerisaten zur Herstellung von Rohren.

Rohre aus Ethylenpolymerisaten besitzen den großen Vorteil der leichten Verarbeitbarkeit. Sie werden für Trinkwasserleitungen, Hausabfluß, Gasleitungen, Fußbodenheizungen ect. verwendet. Zur Herstellung von Rohren aus Ethylenpolymerisaten und deren Verwendung ist eine Stabilisierung der Ethylenpolymerisate mit Stabilisatoren erforderlich.

Es ist bereits bekannt, zur Stabilisierung von Ethylenpolymerisat, das für die Herstellung von Rohren verwendet werden soll, dem Ethylenpolymerisat eine Mischung aus Peroxid, Schwefel und phenolischem Stabilisator beizumischen (vgl. DE-AS 11 37 859). Es ist auch bereits bekannt, daß man durch Zusatz von Schwefel zu phenolischen Antioxidantien enthaltenden Polyolefinmassen die Stabilisierung der Polyolefinmassen verbessern kann (vgl. DE-PS 12 24 922, GB-PS 836 996 und US-PS 2 982 756).

Dabei hat sich allerdings gezeigt, daß viele phenolische Antioxidantien in Kombination mit elementarem Schwefel zur Stabilisierung von Brauchwasser führenden Rohren nicht in Frage kommen, weil das Wasser den Geruch und Geschmack der Antioxidantien annimmt.

Der Erfindung liegt die Aufgabe zugrunde, synergistisch wirkende Stabilisatormischungen aufzufinden, die sowohl geringe Stabilisatormengen erlauben und damit eine verbesserte Vernetzungsausbeute sowie Lunkerfreiheit des Rohrmaterials gewährleisten, als auch Geruch und Geschmack des Wassers in den Rohrleitungen nicht beeinträchtigen.

Fre/P

Diese Aufgaben wurden gelöst durch die Verwendung von Mischungen aus a) 100 Gewichtsteilen Ethylenpolymerisat der Dichte 0,93 bis 0,96 g/$cm^3$ und des Schmelzindex 0,5 bis 20 g/10 min, b) 0,05 bis 0,2 Gewichtsteilen einer Verbindung der allgemeinen Formel X-R, worin

X = 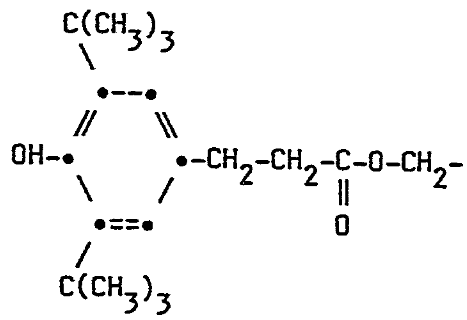

und R = $-C_{17}H_{35}$ oder $-C(X)_3$ und c) 0,02 bis 0,1 Gewichtsteile elementarer Schwefel und eines Vernetzungsmittels zur Herstellung von Rohren.

Bevorzugt verwendet man als Vernetzungsmittel 0,1 bis 0,5 Gewichtsprozent, bezogen auf die Mischung, einer in der Wärme radikalisch zerfallenden organischen Verbindung oder energiereiche Strahlung.

Unter Ethylenpolymerisaten werden die Homopolymerisate des Ethylens sowie Copolymerisate aus Ethylen und Butenen, Pentenen und Hexenen, die 66 bis 100 Mol.% Ethylen einpolymerisiert enthalten, verstanden. Die Ethylenpolymerisate weisen eine Dichte von 0,93 bis 0,96 g/$cm^3$ (nach DIN 53 479) und einen Schmelzindex bei 190°C und 21,6 kp Belastung von 0,5 bis 20 g/10 min (nach DIN 53 735) auf. Comonomere sind insbesondere Buten-1 und Hexen-1. Die Ethylenpolymerisate sind so bekannt, daß auf ihre Herstellung hier nicht eingegangen werden muß.

Bei den Verbindungen der allgemeinen Formel X-R handelt es sich um das Pentaerythrityltetrakis [3-(3,5-di-tert.-butyl-

-4-hydroxyphenyl)-propionat] und das Octadecyl-3-(3,5-di-tert.butyl-4-hydroxyphenyl)-propionat.

Die in der Wärme zerfallenden radikalischen Vernetzungsmittel sind übliche organische Peroxide sowie übliche Azoverbindungen, die in der Wärme Radikale bilden. Die radikalische Vernetzung von thermoplasthaltigen Massen ist seit langem Stand der Technik, so daß sich eine nähere Beschreibung hier erübrigt. Die radikalisch zerfallenden Vernetzungsmittel sind in Mengen von 0,1 bis 0,5 Gewichtsprozent, bezogen auf die Mischung aus Ethylenpolymerisat, Stabilisator und Schwefel, enthalten.

Auch die Verwendung von energiereicher Strahlung zur Vernetzung von Ethylenpolymerisat-Formkörper ist seit langem Stand der Technik und beispielsweise in der Literaturstelle A. Chapiro, "Radiation Chemistry of Polymeric Systems", Interscience Publishers, New York-London, 1962, beschrieben. Die Stabilisatoren sind an sich und als phenolische Stabilisatoren für thermoplastische Kunststoffe unter den Handelsnamen Irganox 1076 und Irganox 1010 so bekannt, daß sich eine weitere Beschreibung erübrigt. Die phenolischen Stabilisatoren sind in Mengen von 0,05 bis 0,2 Gewichtsteilen in der Mischung enthalten.

Der elementare Schwefel wird pulverförmig eingesetzt. Der Schwefel ist in Mengen von 0,02 bis 0,1 Gewichtsteilen in der Mischung enthalten.

Als Vernetzungsmittel kann die obige Mischung entweder ein in der Wärme radikalisch zerfallende organische Verbindung enthalten oder sie kann, nach der Verformung zu Rohren, mit energiereicher Strahlung versetzt werden. Als energiereiche Strahlung kommt vorzugsweise Elektronenstrahlung von 1 bis 3,5 MeV Bestrahlungsspannung in Betracht. Die Dosis liegt zwischen 50 und 400 kGy.

Zur Herstellung der Mischung liegt das Ethylenpolymerisat in der Regel grießförmig vor. Die Mischung mit den Stabilisatoren und mit Schwefel erfolgt zweckmäßig unterhalb der Schmelztemperatur des Ethylenpolymerisats. Bevorzugt werden die Additive dabei auf die Oberfläche der Polymerisatkörner verteilt. Bei der anschließenden Verarbeitung unter Plastifizierung oberhalb der Schmelztemperatur des Thermoplasten werden die Additive homogen auf das gesamte Volumen des Ethylenpolymerisats verteilt.

Die Rohre selbst werden nach üblichen Verfahren hergestellt, z.B. nach Engel (vgl. DE-OS 16 79 826) nach PaM (vgl. DE-OS 24 05 927 und 27 12 544) oder nach dem in der SE-OS 77/104 448 beschriebenen Verfahren.

Es ist ein Vorteil der erfindungsgemäßen Verwendung oben beschriebener Mischungen, daß die Vernetzungsausbeute, d.h. die Anzahl gebildeter Vernetzungen pro Masse des eingesetzten Vernetzungsmittels oder pro Dosis der angewandten energiereichen Stahlung, verbessert werden kann. Es wird auch die Lunkerbildung vermindert, die meist auf mangelhafte Verschweißung der zusammengepreßten Ethylenpolymerisatteilchen in der Rohrwand zurückzuführen ist. Geringere Stabilisatormengen an der Oberfläche der Partikel vermindern die Bildung von Lunkern. Zusätzlich wird die Lunkerbildung durch geringere Vernetzerkonzentration vermindert, da die flüchtigen Reaktionsprodukte eine Übersättigung des Ethylenpolymerisats bewirken, die umso geringer ist, je geringer die angewandte Vernetzungskonzentration ist. Diese Übersättigung läßt bekanntlich an Keimstellen wie Mikrolunkern und anderen mikroskopischen Inhomogenitäten

hohen Gasdruck entstehen, der für ein Aufreißen des Gefüges unter Bildung größerer Lunker sorgen kann.

In den folgenden Beispielen wird unter Stabilisator I die Verbindung Octadecyl-3-(3,5-di-tert.butyl-4-hydroxyphenyl)-propionat und unter Stabilisator II die Verbindung Pentaerythrityl-tetrakis [3-(3,5-di-tert.-butyl-4-hydroxyphenyl)propionat] verstanden.

Beispiel 1 A, B und C

Grießförmiges Polyethylen (PE) der Dichte 0,952 g/$cm^2$ und des Schmelzindex von 20 g/10 min (bei 190°C unter einer Auflast von 21,6 kp) wird durch einstündiges Rotieren eines zur Hälfte gefüllten zylindrischen Gefäßes trocken gemischt mit den Stabilisatoren I, II sowie in Beispiel B und C mit elementarem Schwefel. Die Mengen in Gew.% sind in der Tabelle angegeben. Gleichzeitig wird 0,3 Gew.%, bezogen auf die Gesamtmischung, Ditertiärbutylperoxid eingemischt. Die erhaltenen Mischungen werden bei 200°C 20 Minuten lang zu 1 mm dicken Platten verpreßt. Das PE wird dabei vernetzt. An den Platten wird der Vernetzungszustand durch den Quellwert (2 Stunden 140°C Xylol) und den Gelgehalt (8 Stunden 140°C Xylol) bestimmt. Die Ergebnisse sind in der Tabelle angegeben.

Die Alterungsbeständigkeit wird ermittelt, indem man die Platten bei 150°C in Umluft frei hängend aufbewahrt und in regelmäßigen Zeitabständen die Reißdehnung mißt. Die Zeit in Tagen (d) bis die Reißdehnung auf 50 % des Ausgangswertes abgesunken ist wird als Maß für die Alterungsbeständigkeit angegeben.

Tabelle 1

| | Stabilisator % | | Schwefel % | Q | Gel | d |
|---|---|---|---|---|---|---|
| | I | II | | | | |
| A | 0,07 | 0,3 | 0 | 7,5 | 75 | 24 |
| B | 0 | 0,1 | 0,05 | 6,0 | 89 | 30 |
| C | 0,1 | 0 | 0,05 | 5,8 | 91 | 30 |
| D | 0,1 | 0 | 0 | 5,5 | 93 | 2 |

Beispiele 2 A, B und C

Grießförmiges PE, Dichte 0,938 $g/cm^3$ und des Schmelzindex 10 g/min (190°C/21,6 kp) wird wie unter 1 gemischt mit dem Stabilisator II und - im Fall B - mit elementarem Schwefel. Mengen s. Tabelle 2.

Aus dem Mischgut werden auf einer Schneckenpresse Rohre hergestellt (20 mm äußerer Durchmesser, 2 mm Wandstärke). Die Rohre wurden mit energiereichen Elektronen von 2 MeV mit einer Dosis von 12 kGy bestrahlt. Dabei wird das Polyethylen vernetzt. Prüfungen des Vernetzungszustandes und des Alterungsverhaltens wie im Beispiel 1.

Tabelle 2

| | Stabilisator II % | S | Q | Gel | d |
|---|---|---|---|---|---|
| A | 0,3 | 0 | 6,5 | 70 | 30 |
| B | 0,1 | 0,05 | 5,5 | 75 | 40 |
| C | 0,1 | 0 | 5,0 | 80 | 2 |

## Patentansprüche

1. Verwendung von Mischungen aus
   a) 100 Gewichtsteilen Ethylenpolymerisat der Dichte 0,93 bis 0,96 $g/cm^3$ und des Schmelzindex 0,5 bis 20 g/10 min,
   b) 0,05 bis 0,2 Gewichtsteile einer Verbindung der allgemeinen Formel X-R, worin

X = 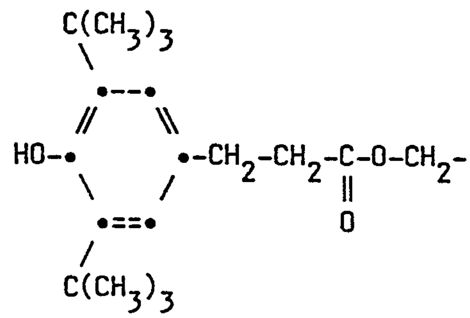

und R = $-C_{17}H_{35}$ oder $-C(X)_3$ und
   c) 0,02 bis 0,1 Gewichtsteile elementarer Schwefel
und eines Vernetzungsmittels zur Herstellung von Rohren.

2. Verwendung von Mischungen nach Anspruch 1, dadurch gekennzeichnet, daß man als Vernetzungsmittel 0,1 bis 0,5 Gewichtsprozent, bezogen auf die Mischung, einer in der Wärme radikalisch zerfallenden organischen Verbindung einsetzt.

3. Verwendung von Mischungen nach Anspruch 1, dadurch gekennzeichnet, daß man als Vernetzungsmittel energiereiche Stahlung einsetzt.

Europäisches Patentamt

**0077948**
Nummer der Anmeldung

# EUROPÄISCHER RECHERCHENBERICHT

EP 82 10 9289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | --- US-A-2 801 225 (J. HARDING) | | C 08 L 23/04 |
| A | --- KAUTSCHUK + GUMMI KUNSTSTOFFE, Band 32, Nr. 10, Oktober 1979, Seiten 756-759, Heidelberg, DE. W.C. ENDSTRA: "Peroxid-Vernetzung von Polymeren" | | |
| A | --- KUNSTSTOFFE, Band 67, Nr. 11, November 1977, Seiten 684-687 F. MITTERHOFER: "Verarbeitungs-Stabilisatoren für Polyäthylen" ----- | | |
| | | | RECHERCHIERTE SACHGEBIETE (Int. Cl. ³) |
| | | | C 08 L 23/00 |

Der vorliegende Recherchenbericht wurde für alle Patentansprüche erstellt.

| Recherchenort | Abschlußdatum der Recherche | Prüfer |
|---|---|---|
| DEN HAAG | 02-02-1983 | STIENON P.M.E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument